Europäisches Patentamt

European Patent Office

Office européen des brevets

(19)

(11) EP 0 660 258 B1

(12) **EUROPEAN PATENT SPECIFICATION**

(45) Date of publication and mention
of the grant of the patent:
**08.03.2000 Bulletin 2000/10**

(51) Int. Cl.7: **G06K 11/18**, G06F 3/033,
G04G 1/00

(21) Application number: **94309434.2**

(22) Date of filing: **16.12.1994**

(54) **Electronic pointing device**

Elektronische Hinweisanordnung

Dispositif de pointage électronique

(84) Designated Contracting States:
**DE FR GB**

(30) Priority: **20.12.1993 JP 32058293**
**20.12.1993 JP 32058393**

(43) Date of publication of application:
**28.06.1995 Bulletin 1995/26**

(73) Proprietor:
**SEIKO EPSON CORPORATION**
**Shinjuku-ku Tokyo (JP)**

(72) Inventor: **Amano, Kazuhiko**
**Suwa-shi, Nagano-ken (JP)**

(74) Representative:
**Sturt, Clifford Mark et al**
**Miller Sturt Kenyon**
**9 John Street**
**London WC1N 2ES (GB)**

(56) References cited:
**US-A- 5 262 777**      **US-A- 5 267 566**
**US-A- 5 335 557**

## Description

The present invention relates to a device for generating a signal indicative of the position at a point on a surface to which pressure is applied. More particularly, but not exclusively, the invention relates to an electronic screen pointing device to assist in inputting data into personal computers, or to select a function in digital watches.

Inputting of data into personal computers (PCs) and work stations is conventionally performed with the use of keyboards as a primary method of inputting data, and pointing devices as an assisting device for data entry. Pointing devices are used, for example, to specify a position of a cursor mark within a display screen, and fall broadly into the following two categories.

(1) Absolute Coordinates Type (touch screen type and tablet type, for example)

These devices are primarily static devices. For these devices, an external input member is needed to correspond with the positions on a display screen, and a position is specified by specifying an area on the external input member. Input operations are performed by touching a transparent electrode on the display screen in the touch screen type, and by contacting a plate type input device with a pen type device, in the tablet type.

(2) Relative Coordinates Type (Mouse or tracker ball, for example).

These devices are primarily dynamic devices. The device is able to move a cursor mark on a screen in terms of the pulsed data derived from planar movements of the pointing device, whose movement vectors (transfer vector per unit time) are input into a computer by transforming the linear movements into digitized pulse data.

The first type of pointing devices suffers from the disadvantage that the device itself is complex and expensive, and is not easily made compact because of the nature of the device structure itself.

For example, the touch screen structure incorporates a transparent electrode on top of a display screen attached to a fixed size apparatus, thus it is not suitable for making the pointing device alone compact. Similarly, the tablet type device operates on a one-to-one relationship between the screen and the touching area, and they too are not suitable for making a compact apparatus.

For the relative coordinates type of pointing devices, the following problems arise.

A mouse requires a certain amount of space for moving of a mouse casing on a flat surface, as well as two encoders for detecting the x- and y-components of a movement vector. A tracker-ball has a moving ball and a fixed main body, so that the space for moving the main body is not required; however, it too requires two encoders for detecting the x- and y-components of a movement vector.

Therefore, to produce a compact pointing device of the relative coordinates type, there is a problem in that it is necessary to construct a very precise ball rotation detection device. Furthermore, because the device has moving parts, it is vulnerable to picking up dust particles, thus presenting a problem of long-term reliability of the device. Recently, optical devices for detecting the x- and y-components have appeared in the marketplace, but these present a problem in that a special pad must be used.

In the meantime, there have been wrist watches capable of not only displaying time but also capable of performing various computational tasks, and inputting, memorizing and displaying data. Such wrist watches are provided with a plurality of switch buttons for selecting a function, and keys for inputting data, and such function keys are becoming more numerous, as more functions are offered.

It is not only difficult to provide a plurality of switch buttons in a limited space of a wrist watch, but such an approach even leads to a situation of making the operation itself cumbersome and impairing the process of selecting a desired function.

An alternative would be to use a tracker ball as the pointing device for selecting a desired function from a screen menu of a computer, but such a device would require not only a rotation member but also two encoders for detecting the x- and y- components of the moving direction. Therefore, such a cursor moving device would not be applicable as a pointing device for such devices as a wrist watch which needs to be small.

It may also be possible to provide a switch device to display positive and negative directions on the x- and y-axes, and to move a cursor according to the display. However, such a device would still require moving parts such as springs and contacts, and is vulnerable to loss of reliability when the parts are miniaturized or their numbers are increased.

JP-A-05/233085 discloses a device presenting the features defined in the preamble of claim 1.

A general object of the present invention is to present an electronic pointing device having a long-term service reliability, and which can be miniaturized and operated without involving a mechanical rotating device.

According to one aspect of the present invention, there is provided a device for generating a signal indicative of the position of a point on a surface to which pressure is applied as defined in claim 1.

According to another aspect of the present invention, there is provided an electronic pointing device as defined in claim 12.

According to the first pointing device, when an operator presses on an exposed surface of the elastic member, vibrational pressures are propagated from the pressed point as the center. The intensity of the propagating pressure signals is attenuated in proportion to the square of the distance travelled. The pressure signals are detected by the pressure sensing elements disposed in the bottom section. The coordinates of the pressed point projected on the bottom surface are computed from the ratios of signals received by the pressure sensors, according to specific formulas. The pressed point can then be specified in terms of the orthogonal x- and y- axis of the bottom surface with the origin taken at the center of the bottom surface, and a corresponding position on a display screen can be defined by a suitable marking such as a cursor mark. The device structure does not involve moving parts, therefore, a long-term service reliability may be assured. Since the operation of the device involves pressing on the elastic member and does not involve moving of the elastic member itself, the device does not require a large space for its operation. Computation of the projection coordinates can be performed repeatedly at specific time intervals so that the coordinates can be specified on a continual basis.

According to another aspect of the present invention as defined in claim 13, the electronic pointing device comprises further: second computing means for computing the position indicator signals at specified time intervals, and computing a movement vector for indicating a positional change of the surface point in a given time interval.

According to the second pointing device, the movement of a pressed point may be defined. An operator moves a pressing finger on the surface of the elastic member by an amount and in a direction to move a cursor mark on a display screen. As in the first pointing device, vibration pressure signals are generated from the pressed point, and as the pressed point moves on the surface of the elastic member, so do the centers of the propagating signals on the surface. The computational process involves a series of pressure points in a given sampling interval. A movement vector is thus computed to move the cursor mark from one position on a display screen to another point on the display screen. The second pointing device is capable of specifying a series of moving points on the surface of the elastic body in terms of relative projection coordinates, without requiring moving parts. The long-term service reliability may be thus assured. It is obvious that the second pointing device may share other advantages of the first pointing device such as compactness and ease of operation.

An optional aspect of the device is that the speed of the movement vector can be computed. If the pressed point is moving rapidly, then the sampling frequency is adjusted such that the movement vector is computed on a finer time scale by sampling the movement vector more frequently.

Another optional aspect of the device is that the elastic member is adhesively bonded to the base section which houses the pressure sensing elements. This arrangement prevents the pressure being applied directly to the pressure sensing members, and provides higher accuracy of position indication.

Another optional aspect of the device is that the number of pressure sensing elements can be increased from three to four, and the four elements may be disposed equidistantly from the origin in a four fold symmetry. In this arrangement, because of the symmetry of the elements, the pressure signals detected by the four elements can be compensated so as to equal each other to define the position of the pressed point more precisely. Also, this arrangement enables the propagation distance along the orthogonal axis to be minimized, compared with the case of three pressure sensing elements, by computational method.

Still another optional aspect of the device is that the three or more pressure sensing elements can be fabricated on a common semiconductor base. This arrangement enables the use of semiconductor technology, and the device can be made small and precisely.

Still another optional aspect of the device is that the pressure signals can be detected by three or more pressure sensing elements housed in respective cavities with the opening facing towards the bottom surface. This arrangement of the elements increases the sensitivity of the device by enabling the detection of minute changes in the internal cavities.

Still another optional aspect of the device is that the cavities may be filled with a liquid like material. This will minimize the attenuation of the pressure signals through transmission in air, and increases the sensitivity of detection.

Still another optional aspect of the device is that each cavity may be connected through an associated pressure transmission means such as a tube to a position sensor so that each pressure sensing element can detect a pressure change within its own associated pressure transmission means, thereby making pressure detection independent of the placement of the position indicators.

Still another optional aspect of the device is that the cavities and the associated pressure transmission tubes may be filled with a liquid like material.

Still another optional aspect of the device is that the pressure transmission tubes may be made of an elastically rigid material, thereby increasing the sensitivity of detection of the pressure signals.

Still another optional aspect of the device is that the cavities and the rigid pressure transmission tubes can be filled with a liquid like material to further increase the sensitivity of detection of the pressure signals.

Still another optional aspect of the device is that the pressure transmission tubes can be directed towards a common point at the center of the bottom section. It is then possible to provide many pressure detection devices in a given area of the bottom section, and contributes to lowering the cost of the device.

Still another optional aspect of the device is that the surface of the elastic member can be covered over with a material having a higher modulus of elasticity than the elastic member. It is then possible to minimize the propagation of surface pressure waves along the elastic member to increase the signals directed to the position indicators, resulting in higher intensities of the pressure signals at the pressure sensing elements.

Still another optional aspect of the device is that the higher modulus of elasticity surface covering may comprise a large number of small pieces which may be spaced apart. By having such an arrangement of the surface covering, the choice of a pressed point becomes somewhat restricted; however, because the surface propagation is minimized, the level of pressure signals detected by the pressure sensing elements is increased.

Still another optional aspect of the device is that the pointing device can be disposed on a hand held casing of an apparatus so as to expose the elastic element on the top surface of the apparatus to form a control surface. This arrangement of the pointing device allows the user to specify coordinates by simply pressing on the elastic element on the pointing device.

Still another optional aspect of the device is that the device can be incorporated in an electronic device having a plurality of functions for performing computational tasks, and displaying the computed results on a display screen. The electronic device may be a portable electronic device worn by the user. The coordinate specification is achieved by the principle of defining the projection coordinates used in the first pointing device, by simply pressing on the exposed area of the elastic element.

Still another optional aspect of the device is that the pointing device is provided with pressure sensing elements which are biased elements so as to generate output signals in proportion to applied pressure. The biasing can be applied equally and/or continually to each of the pressure sensing elements so that the pressure signals detected are compared under the same operating conditions.

Still another optional aspect of the device is that the biasing is applied periodically, instead of continually, only during a measuring period for achieving conservation of electrical power.

Still another optional aspect of the device is that the biasing is applied to each of the resistance circuit periodically for achieving conservation of electrical power.

Still another optional aspect of the device is that the biasing is a current pulse for circuit simplicity and conservation of electrical power.

Conveniently, the contact surface/surface of the elastic member is smaller than an adult's hand. It may be substantially the same size as an adult's index finger tip.

The position of the point on the contact surface/surface of the elastic member which is pressed may be determined mathematically from the values of different pressures sensed by the sensors of the sensing means, or by a look-up table in which the pressure-representative values associated with each sensor for a given pressed point on the contact surface are stored, and with which the sensed values are compared to find the best match.

For a better understanding of the invention, embodiments will now be described by way of example with reference to the accompanying drawings, in which:-

Figure 1 is a perspective view of a first embodiment of the pointing device of the present invention.

Figure 2 is a block circuit diagram of the first embodiment.

Figure 3A shows a perspective view of a partial cutaway section of the position sensor

Figure 3B shows the position indicators in relation to the pressure sensing elements.

Figure 4 is an enlarged cross sectional view of the planar bottom section having a position sensor including a bonding interface between an elastic rubber and a semiconductor base.

Figure 5 is an illustration for explaining the principle of determination of the projection coordinate in terms of the position sensors disposed on the planar bottom section.

Figure 6A illustrates a static position of the operation of the position sensor.

Figure 6B shows a finger movement which defines a movement vector.

Figure 7A shows a plan view of the planar bottom section of a variation of the first embodiment of the position sensor.

Figure 7B shows the bonding interface between the elastic rubber and the semiconductor base.

Figure 8 shows another variation of the first embodiment of the position sensor.

Figure 9 shows another variation of the first embodiment of the position sensor.

Figure 10 is a front view of a computer showing a cursor movement on a display screen in terms of the x- and y-components of a movement vector u.

Figure 11 shows a second embodiment of the pointing device of the present invention.

Figure 12 is a block circuit diagram of the second embodiment.

Figure 13 a perspective view of a third embodiment of the pointing device of the present invention.

Figure 14A shows an off-center protruding body having a low height of a variation of the third embodiment.

Figure 14B is an off-center protruding body having a high height.

Figure 15 shows a fourth embodiment of the pointing device incorporated in a wrist watch.

Figure 16 shows an example of a LCD menu display.

Figure 17 is a block circuit diagram for biasing the pressure sensing elements in the fourth embodiment.

Figure 18A is an example applying a constant biasing.

Figure 18B is an example of a periodic application of biasing.

Figure 18C is an example of a continual application of biasing during a measuring period.

Figure 18D is an example of a periodic application of biasing during a measuring period.

Figure 18E is an example of a continual application of biasing current pulses.

Figure 18F is an example of a periodic application of biasing current pulses

Figure 19 is a block circuit diagram in the fourth embodiment of the pointing device applicable to a wrist watch.

First, the construction details of the pointing device will be explained, followed by explanation of the principle of projection coordinates position determination, followed by explanation of the movement vector. Four embodiments, I to IV, are presented to explain the features and application possibilities of a compact pointing device of the present invention.

I: First Embodiment

I-I Construction

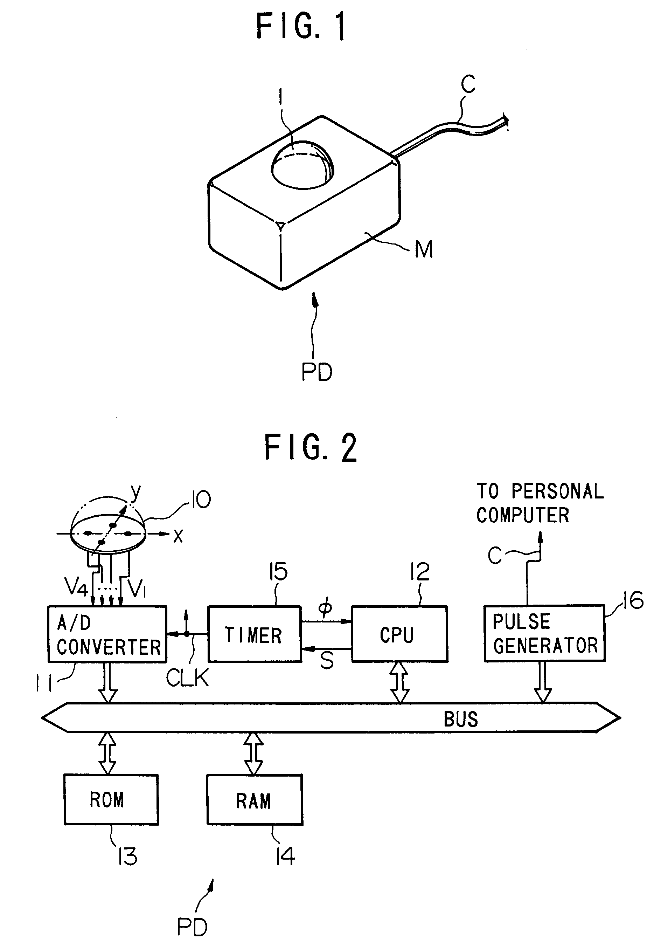

Figure 1 is an external view of a pointing device PD.

As shown in Figure 1, the pointing device PD comprises a casing M and a roughly semi-spherical elastic member 1 disposed on a top surface of the casing M. A cord C is provided through a side surface of the casing M for transmitting operational data from the pointing device for specifying coordinates to a personal computer and other data processing devices. Details will be explained later.

I-1-1 Position Sensor

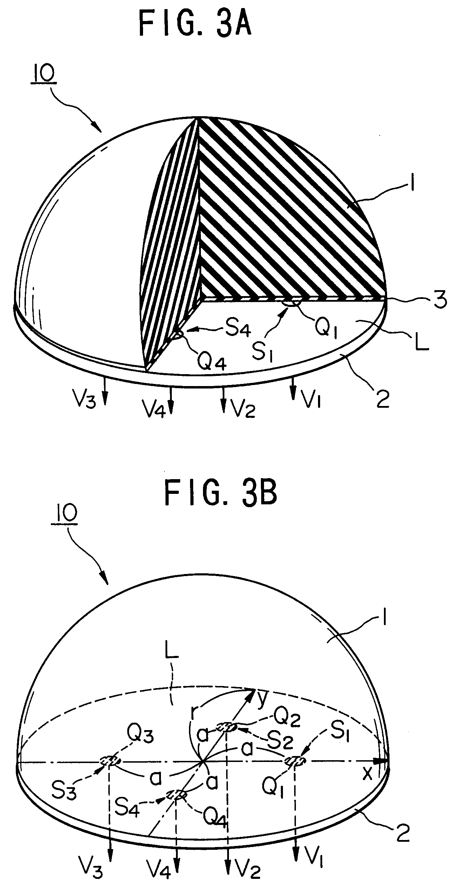

A position sensor 10 is provided on the base 2 of the semi-spherical elastic member 1, as shown in Figure 3, and performs a function of computing projection coordinates of a pressed point generated on the elastic member 1.

In Figure 3A, a partial cut-away view of the position sensor 10 shows an interior configuration of the position sensor 10.

As shown in Figures 3A and 3B, the position sensor 10 comprises piezo-electric pressure sensing elements $S_1$ to $S_4$ and an elastic member 1 of a roughly semi-spherical shape. The following explanation assumes that the elastic member 1 has a perfectly semi-spherical shape, although other shapes are possible.

The piezo-electric pressure sensing elements (the elements, for short), $S_1 \sim S_4$ are disposed on the plane surface L of a semiconductor base 2 of the elastic member 1, and generate electrical voltages, V1~V4 in proportion to the applied pressure. Further details of the pressure sensing device will be given later.

The elements $S_1 \sim S_4$ correspond to position indicators $Q_1 \sim Q_4$, and their coordinates (x, y) are given with respect to the origin (0, 0) of the plane surface L and a radius r of the elastic member 1. Referring to Figure 3B, $Q_1 \sim Q_4$ are represented by the following coordinates defined by x- and y-axes:

(a, 0), (0, a), (-a, 0), and (0, -a)

where r>a>0 and the positive directions are in the direction of the arrows on the x- and y-axes.

In this illustration, the four points $Q_1 \sim Q_4$ are equidistant from the origin (0, 0) by an amount "a".

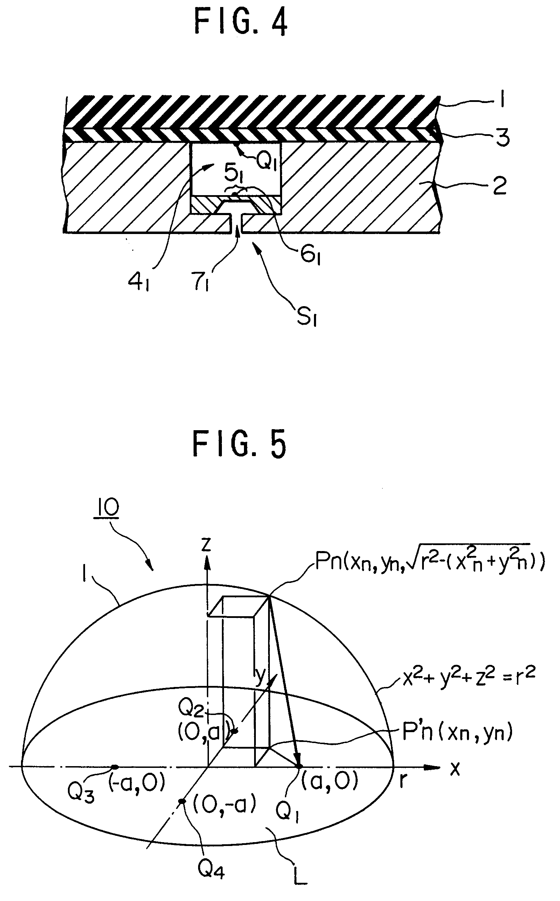

Next, the bonding interface between the elements and the elastic member 1 will be explained with reference to the element $S_1$ and Figure 4 which shows its device configuration.

A base section of the position indicator, shown in Figure 4, comprises a semiconductor base 2 bonded to the elastic member 1 with an intervening bonding layer 3. The element $S_1$ is fabricated within a small cavity $4_1$ formed in the base 2 to correspond with the position indicator $Q_1$. The element $S_1$ comprises a diaphragm member (a thin film of several tens of μm thickness) $5_1$, and a strain gage $6_1$ fabricated on top of the diaphragm member $5_1$.

The element $S_1$ is fabricated using a known semiconductor etching technique, and in particular, the strain gauge is a piezo-electric device having a p-type resistive layer made by selective diffusion of impurities (such as boron) in the base 2.

Similarly, the elements $S_2 \sim S_4$ are fabricated on the base 2, and serve as position indicators $Q_2 \sim Q_3$ by generating a voltage proportional the applied pressure.

The position sensor 10 generates position information as follows. When a pressure is applied on a surface of the elastic member 1, pressure waves are generated and propagated through the elastic member 1 as elastic waves to apply vibrational forces on the cavities $4_1 \sim 4_4$ corresponding to the position indicators $Q_1 \sim Q_4$. The strain gauges $6_1 \sim 6_4$ experience strains in response to the pressure differentials (caused by the difference in the pressure in the cavity interior and the outside atmospheric pressure) exerted on the gauges $6_1 \sim 6_4$ through the opening 7. Pressure variations cause the resistance of the gauges $6_1 \sim 6_4$ to vary accordingly.

The terminal ends of the gauges $6_1 \sim 6_4$ are coated with vapor deposited aluminum for providing external electrical connections for processing the output resistance signals by known circuitry. The result is a generation of the voltages $V_1 \sim V_4$ in proportion to the signal strength from position indicators $Q_1 \sim Q_4$.

If necessary, the cavities $4_1 \sim 4_4$ can be filled with a liquid medium having a low coefficient of thermal expansion (e.g. water, alcohol), or liquid-like material (e.g. gelatin). By so doing, micro-vibrations generated in the cavities may be detected and converted into accurate electrical signals with low attenuation.

I-1-2 Principle of Coordinates Determination

Next, the principle of determining the projection coordinates using the position sensor 10 will be explained with reference to Figure 5. Figure 5 is a simplified version of the position sensor shown in Figure 3, and the details have been omitted for the purpose of illustrating only the principle of projection coordinates determination.

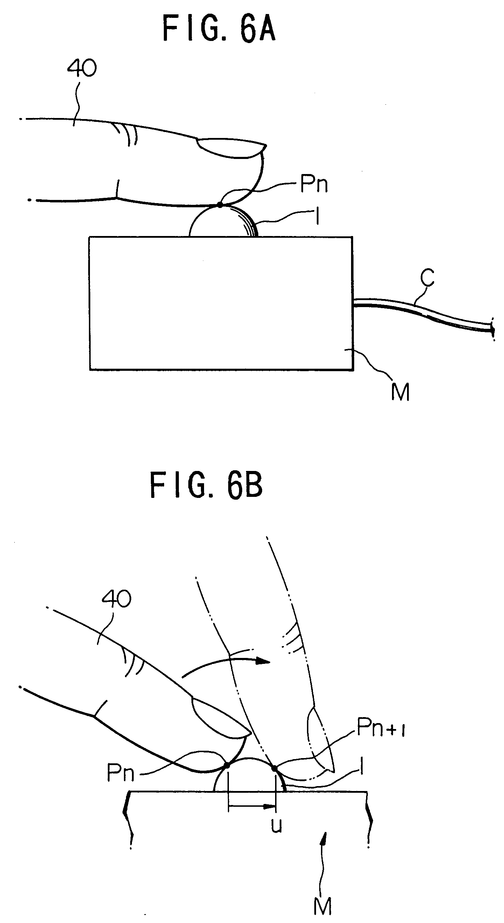

When an operator presses on a surface of the elastic member 1 with a tip of a finger 40 as illustrated in Figure 6, vibrational forces are generated at a point $P_n$ of the elastic member 1 as a result of arterial blood pressures acting through the finger tip. The point $P_n$ is taken as the effective center point of the generation of vibrational forces. In other words, the point $P_n$ is taken as the center point of application of the pressed point generated by the finger 40.

Assuming that vibrations are produced at time $t=n$, the vibrational forces are propagated as elastic pressure waves through the elastic member 1. The pressure waves are attenuated in proportion to a square of the distance travelled, and are detected by the elements $S_1 \sim S_4$ which produce corresponding electrical voltages $V_1 \sim V_4$.

The equation for the spherical surface of the elastic member 1 is given by:

$$x^2 + y^2 + z^2 = r^2 \qquad (1),$$

where z>0.

Therefore, the point $P_n$ (x,y) on the spherical surface of the elastic member 1 is given from Equation (1) by:

$$P_n(x_n, y_n, \sqrt{r^2 - (x_n^2 + y_n^2)}) \qquad (2).$$

From Equations (1) and (2), the distances between the point Pn and the position indicators $Q_1 \sim Q_4$ are given respectively by the following equations.

$$\overline{P_n Q_1} = \sqrt{a^2 - 2ax_n + r^2} \qquad (3)$$

$$\overline{P_n Q_2} = \sqrt{a^2 - 2ay_n + r^2}$$

$$\overline{P_n Q_3} = \sqrt{a^2 + 2ax_n + r^2}$$

$$\overline{P_n Q_4} = \sqrt{a^2 - 2ay_n + r^2}$$

Next, because the vibrational intensities decrease in proportion to a square of the propagation distance from the elastic member 1, therefore, the voltages $V_1 \sim V_4$ generated by the elements $S_1 \sim S_4$ are inversely proportional to a square of the propagation distance. The voltages $V_1 \sim V_4$ are given by the equality equations as follows.

$$V_1(\sqrt{a^2 - 2ax_n + r^2})^2 \qquad (4)$$

$$= V_2(\sqrt{a^2 - 2ay_n + r^2})^2$$

$$= V_3(\sqrt{a^2 + 2ax_n + r^2})^2$$

$$= V_4(\sqrt{a^2 + 2ay_n + r^2})^2$$

From Equation (4), the coordinates (x, y) of the point $P_n$ (x,y) are given by the following equations.

$$x_n = \frac{(V_1 - V_3) \cdot (a^2 + r^2)}{2a(V_1 + V_3)} \qquad (5)$$

$$y_n = \frac{(V_2 - V_4) \cdot (a^2 + r^2)}{2a(V_2 + V_4)}$$

As explained above, when vibrational forces are generated at the point $P_n$ on the surface of the elastic member 1, the coordinates of the point Pn can be determined from the values of the output voltages $V_1 \sim V_4$ from the elements $S_1 \sim S_4$. The coordinates of the point $P_n$ thus obtained correspond, in effect, to the coordinates of point $P'_n$, shown in Figure 5, which is a vertical projection of the point $P_n$ onto the plane surface L (corresponding to the position indicators $Q_1 \sim Q_4$ of the elements $S_1 \sim S_4$).

As shown by Equation (5), the coordinate $x_n$ are calculated from the voltages $V_1$ to $V_3$ generated by the elements $S_1$ to $S_3$ located on the x-axis, independently of the coordinate $y_n$ calculated from the voltages $V_2$, $V_4$ generated by the elements $S_2$, $S_4$ located on the y-axis. The method of computation assure that there will be no mutual interference. This is explained further in the following.

It can be seen by analyzing Equation (4) in detail that only three voltage values from the elements $S_1 \sim S_4$ are needed to obtain the coordinates $x_n$, $y_n$, but with this method, the computation of the last coordinate based on the remaining voltage value is affected by the preceding three voltage values. For example, to obtain the coordinates $x_n$, $y_n$ based only on the output voltages from the elements $S_1 \sim S_4$, the coordinate $x_n$ is calculated first from the voltages $V_1$, $V_3$, then substituting this value of $x_n$ in Equation (4), and using the value of voltage $V_2$, the value of $y_n$ can be calculated. But, this method of calculating the coordinate $y_n$ involves the voltages $V_1 \sim V_3$, and if there are differences in the output characteristics among the elements, accurate determination of the final coordinate cannot be performed.

In the above method of coordinates determination process, the roughly semi-spherical elastic member 1 is assumed to be a perfect semi-circular body, i.e., it is assumed that a sphere is sliced exactly in half through its center.

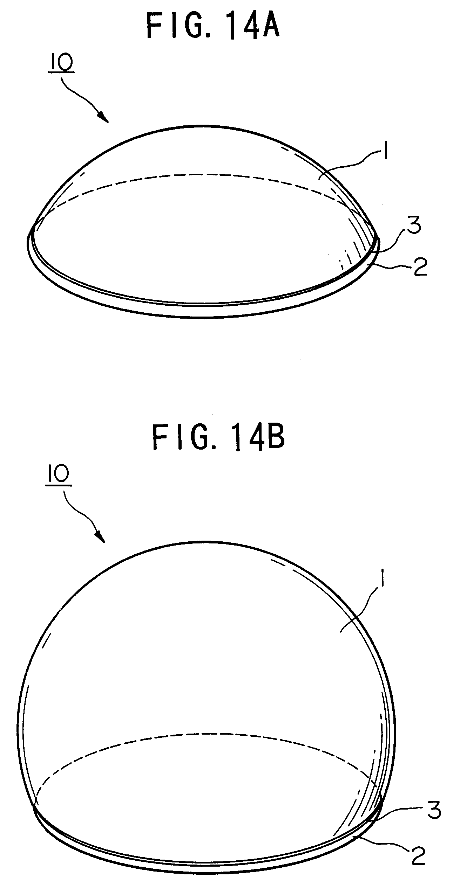

However, from the standpoint of the tactile sense of the user, it is better that the elastic member be a low protrusion shape as illustrated in Figure 14A. Further, it is likely to be difficult to routinely manufacture a perfectly semi-spherical body, and it is more likely that the actual product is more like those shown in Figure 14B or Figure 14A, which are exaggerated forms of off-center products. It is possible to obtain the coordinates xn, yn, through Equation (5) by a method of approximation if the deviation from ideality is within an allowable range.

The method of approximation will be explained in the following. Consider a near semi-spherical elastic member 1 produced by slicing a perfect spherical body off-center by an amount $\Delta z$.

In an elastic body having a radius r, and origin at (0,0), the position indicators $Q_1 \sim Q_4$ based on the elements $S_1 \sim S_4$ will be given as:

$Q_1$ (a, 0, $\Delta z$)
$Q_2$ (0, a, $\Delta z$)
$Q_3$ (-a, 0, $\Delta z$)
$Q_4$ (0, -a, $\Delta z$).

It follows that the squares of the distances between Pn and the position indicators $Q_1 \sim Q_4$ can be obtained from Equation (3) resulting in the following equations:

$$\overline{P_n Q_1}^2 = (x_n - a)^2 + y_n^2 + (z_n - \Delta z)^2 \quad (6),$$

$$\overline{P_n Q_2}^2 = x_n^2 + (y_n - a)^2 + (z_n - \Delta z)^2$$

$$\overline{P_n Q_3}^2 = (x_n - a)^2 + y_n^2 + (z_n - \Delta z)^2$$

$$\overline{P_n Q_4}^2 = x_n^2 + (y_n + a)^2 + (z_n - \Delta z)^2$$

where

$$z_n = \sqrt{r^2 - (x_n^2 + y_n^2)} \quad (7).$$

As before, the vibrational forces generated at the point $P_n$ are attenuated in proportion to a square of the distances, and the voltages $V_1 \sim V_4$ will be inversely proportional to the square of the distances between the point $P_n$ and the respective position indicators. In other words, a product of the square of a distance given in Equation (6) with the corresponding voltage is equal to that in other position indicators, and as before, the coordinates $x_n$, $y_n$ of the point $P_n$ will be given by the following equations.

$$x_n = \frac{(V_1 - V_3) \cdot (a^2 + r^2 - 2z_n \cdot \Delta z + (\Delta z)^2)}{2a(V_1 + V_3)} \quad (8)$$

$$y_n = \frac{(V_2 - V_4) \cdot (a^2 + r^2 - 2z_n \cdot \Delta z + (\Delta z)^2)}{2a(V_2 + V_4)}$$

In Equation (8), if the value of ($\Delta z$) is small enough, the quantity $(\Delta z)^2$ can be disregarded.

Also, it can be seen in Equation (8) that if the value of ($z_a \cdot \Delta z$) can be disregarded when the distance between the origin and the position indicators is made as large as possible within the dimension of the radius r.

By taking these measures, Equation (8) becomes virtually the same as Equation (5).

In the above method of calculating the coordinates $x_n$, $y_n$, the voltage values $V_1 \sim V_4$ were used in Equation (5). The following illustrates an alternative method of computation.

The method involves a calibration experiment to prepare a table relating the ratios of the output voltages $V_1 \sim V_4$ generated by applying vibrational forces of known magnitude on a spot on the exposed surface of the elastic member 1. By repeating this process at different points on the exposed surface of the elastic member 1, it is possible to prepare a table relating the positions on the exposed surface to the generated voltages.

The actual coordinates ($x_n$, $y_n$) of the point Pn is obtained from the table by finding a ratio of the voltages generated from touching a spot on the exposed surface of the elastic member 1.

As explained above, it is clear that the shape of the elastic member 1 is not restricted to a semi-spherical shape only. Other surface shapes suitable to the user can be chosen without invalidating the method of the present invention.

I-1-3 Principle of Calculating Components of Movement Vector

Next, a case of moving the pressed point to another point on the surface of the elastic member 1, as shown in Figure 6, will be considered. The finger 40 has moved from a point $P_n$ at time t=0 to another point $P_{n+1}$ at time t=n+1 . As before, the coordinates ($x_{n+1}$, $y_{n+1}$) of the projected point $P'_{n+1}$ on the plane surface L of the pressed point $P_n$ will be obtained.

When the pressed point moves from t=n+1 to t=n+2 , t=n+3 and so on, a similar technique is used to obtain the respective coordinates of the projected points $P'_{n+2}$ $P'_{n+3}$ and so on.

By subtracting a preceding coordinate value obtained during a preceding sampling cycle from the current coordinate value, i.e. by obtaining $n_{x+1} - x_n$; and $y_{n+1} - y_n$, it is possible to obtain the x- and y-components of a movement vector of the pressed point during one sampling cycle.

Further, by obtaining the magnitude of the component (distance of travel), and dividing it with the duration of the sampling cycle, it is possible to obtain a speed vector of the movement vector at that point in time. If the frequency of the sampling clock is Fs, the speed vector V is given by an expression shown below.

$$V = \frac{\sqrt{(x_{n+1}-x_n)^2+(y_{n+1}-y_n)^2}}{\frac{1}{Fs}} \qquad (9)$$

I-1-4 Clicking operation

In this embodiment, when an average value of the voltages $V_1 \sim V_4$ exceeds a specific threshold value, the pointing device recognizes that a "clicking" operation has been performed. This situation occurs when a finger 40 pressing on a point on the elastic element 1 increases the touching pressure further. It can be recognized from Equation (5) that the calculation of the coordinates is performed on the basis of the ratio of the voltages $V_1$-$V_4$ rather than their absolute values, and therefore, the specified coordinates will not be changed unless the touching point is changed.

The ability to detect a clicking operation can be used in the same way as is done with a conventional mouse (where clicking is performed by pressing a button on the mouse body). For example, applying relatively light finger pressure to the elastic member 1 could act to position the cursor in a particular part of the display on a PC monitor which indicates a particular function. If clicking is then performed the function is activated.

I-2 Variations of the First Embodiment

I-2-1 First variation

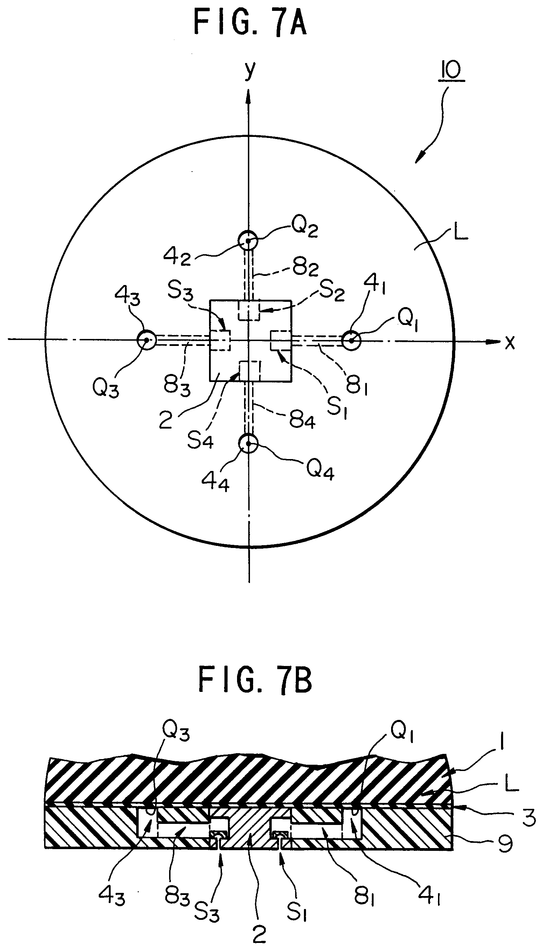

A first variation of the first embodiment will be explained with reference to Figure 7. Figure 7A shows a plan view of another form of the position sensor 10. Figure 7B is a cross sectional view of the location indicator. Those parts which are the same as in the first embodiment will be given the same reference number, and their explanation will be omitted.

The position sensor 10 comprises, as before, a cavity $4_1$ associated with a position indicator $Q_1$. A hollow tube $8_1$ provided on a side surface of the cavity $4_1$ extends towards the center of the plane surface L and joins with the base 2. Similarly, the cavities $4_1$-$4_4$ associated with the position indicators $Q_1$-$Q_4$ are provided which join with the base 2 via the hollow tubes $8_2$-$8_4$ extending towards the center of the plane surface L. The base 2 has the elements $S_1$-$S_4$ which are connected to the openings of the hollow tubes $8_1$-$8_4$.

In this case, the cavities $4_1$-$4_4$ and the hollow tubes $8_1$-$8_4$ are made separately from the base 2 and should be made of an elastically rigid material 9 such as hard plastics or metals. This approach is advantageous because the elements $S_1 \sim S_4$ can be fabricated in groups on the base 2, independent of the position indicators $Q_1 \sim Q_4$, and more effective use of a given base area can be achieved to lower the cost of the device.

In this type of construction, it is permissible to fill the cavities $4_1 \sim 4_4$ and the hollow tubes $8_2 \sim 8_4$ with a liquid or liquid like substances, having a low thermal expansion.

The position indicators 10 illustrated has strain gauges bonded to the position indicators $Q_1 \sim Q_4$ on the plane surface L to detect the strains produced by the vibrations. But this construction is susceptible to strains produced by minute deformation produced, affecting the output signals directly when the elastic member 1 is pressed with a finger. Therefore, it is preferable to construct the device as shown in Figure 4 so that the elastic waves are detected via the bonding layer 3 and the cavities 4.

Also, the number of the elements in this embodiment was four, but the device will perform equally effectively with three elements, as mentioned previously. The need is to ascertain that the positions indicators are provided on the plane bottom section of a semi-spherical elastic member so as to enable the device to accurately correlate the positions of the elements with the positions on the surface of the elastic member 1.

According to the position sensor 10 in the two embodiments presented above, the elastic waves generated by the vibrations at point $P_n$ are propagated not only to position indicators $Q_1 \sim Q_4$ but are propagated uniformly in all directions within the elastic member 1. Therefore, there is a disadvantage that the pressure signal strengths $V_1 \sim V_4$ at the position indicators $Q_1 \sim Q_4$ are dependent on the magnitude of the vibrations generated at the location $P_n$. Therefore, when the signal strengths are low, the S/N ratio is degraded, i.e. the noise becomes more noticeable.

The following embodiments relate to devices having improved S/N ratios.

I-2-2 Other Examples of the Position Sensors

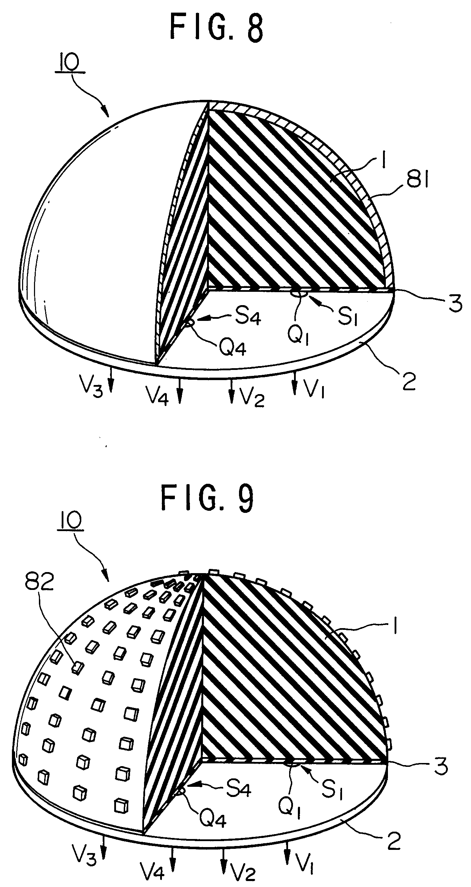

The present inventors discovered that when a cover member 81 having a higher elastic modulus than that of the elastic member 1 (for example a hard plastic or metal) is used to cover the surface of the elastic member 1, as illustrated in Figure 8, the output voltages $V_1 \sim V_4$ from the elements $S_1 \sim S_4$ are increased over those without the covering.

It is thought that this phenomenon is caused by the difficulty of the surface elastic waves to propagate on the surface of the elastic member 1 because of the presence of the covering, and are directed towards the center of the elastic member 1. Therefore, the magnitude of the output signal from the position indicators are increased by the additional pressures felt at the position indicators $Q_1 \sim Q_4$ and thereby increasing the magnitude of the voltage output $V_1 \sim V_4$. In effect, it is thought that the propagation coefficient for the elastic waves from the surface to the position indictors has been improved.

Another advantage of this approach is that the presence of the cover member 81 eliminates direct finger contact on the elastic member 1, and the degradation of the elastic member 1 by finger oil is prevented.

Also, as shown in Figure 9, it is also permissible to disperse many small pieces 82 of the cover member 81 over the surface of the elastic member 1. Although Figure 9 shows a case of bonding the small pieces 82, it is immaterial whether the small pieces 82 are bonded or embedded into the elastic member 1.

The propagation coefficient is higher for the elastic waves travelling from the small pieces 82 to the position indicators than those travelling from the exposed elastic surface of the elastic member 1 to the position indicators. Therefore, there is a tendency for the coordinates of the point $P_n$ to be selectively defined in favor of those positions of the small pieces 82 projected on the plane surface L. However, because the output signals are higher, this type of device would be effective for those applications where the resolution is not the prime requirement.

It is suggested that this problem can be solved by providing a larger number of small pieces 82 and distributing them strategically over the surface of the elastic member 1.

I-3 Electrical Configuration of the First Embodiment

The electrical configuration of the pointing device of the present invention will be explained with reference to Figure 2.

An A/D converter 11 samples the output voltages $V_1 \sim V_4$ at the sample timing determined by the clock CLK, and converts the analogue voltage signals to digital signals. In more detail, the sampled output voltages $V_1 \sim V_4$ are placed in sample hold at the clock rate, and are multiplexed with a multiplexer at a rate significantly faster than the clock rate, and converted into digital signals. By this arrangement, it is possible to convert output voltages $V_1 \sim V_4$ from four elements $S_1 \sim S_4$ into digital signals using only one A/D converter 11. The digital signals are supplied via an interface (not shown) and a bus to a CPU (central processing unit) 12.

A ROM (random access Read Only Memory) 13 stores the programs and other instructions necessary for the CPU 12. A RAM (random access read and write memory) 14 memorizes a coordinate at every clock timing. A timer 15 generates the basic clock frequency $\phi$ for supplying to CPU 12 as well as outputting a divided clock frequency based on the basic clock frequency $\phi$ under the command of the control signal S from the CPU 12.

A pulse generator 16 is used to generate count pulses corresponding to the movement vector computed by CPU 12 to generate signals to indicate clicking operation, and forwards the generated signals to an external device such as a PC (not shown) via a chord C (refer to Figure 1). This pulse generator 16 does not generate count pulses when it is used as the "absolute coordinates" detection type, and the information on the point $P'_n$ is supplied directly to the PC.

CPU 12 computes the coordinates $x_n$, $y_n$ in accordance with Equation (5) from the sampled voltages $V_1 \sim V_4$, and when applicable, subtracts the preceding coordinates $x_{n-1}$, $y_{n-1}$ from the coordinates $x_n$, $y_n$ to obtain the values of the x- and y-components for a movement vector during one cycle of the clock CLK.

CPU 12 also controls the frequency of the clock CLK of the timer 15 by means of the control signal S so that the frequency is reduced to a half, for example, when the movement speed is faster than a specific value, or to double the frequency, for example, when the movement speed is slower than the specific value.

Other operations of the CPU 12 will be further explained later.

I-4. Operations of the First Embodiment

The operations of the pointing device PD of the first embodiment will be explained next.

There are following two ways in which the point device PD is used:

    (1) Absolute Coordinates Detection Type; and
    (2) Relative Coordinates Detection Type.

The selection between the two types can be made by a switch or an external command.

(1) Absolute Coordinate Detection Type

This type is used to define a static point. It is assumed here that the screen coordinates on the PC screen and the coordinates on the plane surface L of the PD device have been correlated on a one to one basis when the pointing device PD is used as the absolute type.

The operator places a finger 40 on the surface of the elastic member 1, as illustrated in Figure 6, and presses on the surface. The center of the pressed point is defined in terms of a vertical projection point of the pressed point on the plane surface L. The pressing operation causes the elastic member 1 to vibrate at the pressed point as the center, and the generated elastic waves are propagated towards the position indicators $Q_1 \sim Q_4$.

The elastic waves are detected by the elements $S_1 \sim S_4$ and are converted into voltages $V_1 \sim V_4$ and digitized. The coordinates $x_n$, $y_n$ are calculated on the basis of the digitized data by the CPU 12, and are forwarded towards a PC.

This operation is repeated for every period of the clock CLK, and successive coordinates are determined.

In the absolute coordinates detection type, for every clock period, the coordinates $x_n$, $y_n$ are generated by the position indicator $Q_1 \sim Q_4$ on the basis of the point on the plane surface L projected by the pressed point on the elastic member 1. The results are forwarded to the PC to specify a point on the screen coordinates.

In the absolute type, when the operator does not press on the elastic member 1, the elastic waves are not generated and the voltage values $V_1 \sim V_4$ of the elements $S_1 \sim S_4$ are all equal to each other. As can be seen from Equation (5), under this condition, the coordinates become (0, 0), and the cursor mark is returned to the origin.

(2) Relative Coordinates Detection Type

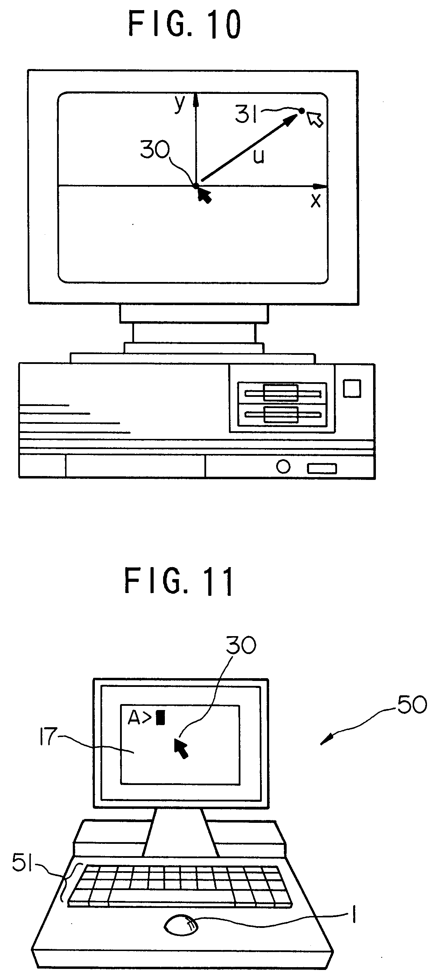

This type is used to define a moving point. Assume that the cursor mark 30 of an initial point (t=0) of a PC is at the center of a screen as shown in Figure 10. Let us assume that the operator wishes to obtain a new cursor point 31 which is located in a right upper corner of the screen. In this case, "u" designates a vector joining the present cursor point with a desired new point. Incidentally, in PC screens, the usual positive direction on the y-axis is down, but to match the directions with the position sensors 10 of the plane surface L, upward direction is taken to be positive, in this embodiment.

To move the cursor mark 30 to the new position, the operator moves the finger 40 as illustrated in Figure 6B.

That is, the operator presses on a point with a finger 40 (step 1), and moves the finger 40 along the surface in the direction of the vector u (step 2). While watching the PC screen, the operator repeats the steps 1, 2 so as to obtain coincidence between the current cursor mark 30 with the desired point 31. This operation performs an action similar to the rotation of the elastic member 1 in the direction of the vector u. It should be noted, however, that the elastic member 1 itself does not actually rotate.

The above operative steps will be explained in terms of the device components presented in the embodiments.

Step 1

At time t=n , when the operator presses on the elastic member 1, elastic vibrations are propagated from the pressed point as the center, as in the case of the absolute type. The elastic waves are detected by the elements $S_1 \sim S_4$, and CPU 12 computes the coordinates $x_n$, $y_n$ of the projected point corresponding to the pressed point on the plane surface L. The coordinates are memorized temporarily in RAM 14.

Step 2

When one clock cycle is over (when t=n+1 ), coordinates $x_{n+1}$, $y_{n+1}$ are similarly computed, and stored in RAM 14 while the coordinates from the previous cycle, $x_n$, $y_n$ are read from RAM 14. A difference is obtained as shown below:

$$x_{n+1} - x_n$$

$$y_{n+1} - y_n$$

to obtain x- and y-components of the movement vectors during one clock cycle. The movement vectors are supplied to the pulse generator 16.

In the pulse generator 16, count pulses and the directional marks corresponding to each movement vector are generated, and are forwarded towards the PC. The count pulses indicate the absolute value of the vector, and the marks indicate the direction of the vector to define the magnitude and the direction of the movement needed for the coordinates $x_n$, $y_n$. The result is that the cursor mark 30 moves by the amount specified by the movement vectors from the preceding point and arrives at the first new point.

Similarly, at time t=n+2 ; the second new coordinates

$$x_{n+2} - x_{n+1}$$

$$y_{n+2} - y_{n+1}$$

are calculated. The count pulses and directional marks are generated to correspond with the second new point, and are forwarded towards the PC. The result is that the cursor mark 30 moves from the first new point to the second new point by the amount and the direction specified by the second movement vectors.

Similar computations are carried out for any number of moves of the pressed point at times t=n+i , where i=1, 2, 3 ... to calculate the respective movement vectors from the coordinates:

$$x_{n+i} - x_{n+i-1}$$

$$y_{n+i} - y_{n+i-1}$$

and the corresponding pulse counts and directional marks are generated and forwarded to the PC, thereby achieving successive movements of the cursor mark 30 specified by the pressed point.

To summarize, the operator moves the pressed point on the elastic member 1 so that the cursor mark 30 on the screen moves from one point to a desired point by repeatedly moving the pressed point on the elastic member 1, and thereby generating a number of appropriate movement vectors u to reach the desired point on the screen.

CPU 12 further controls the frequency division of the clock CLK in the timer 15, by generating a control signal S in accordance with the speed V of the movement vector u obtained in Equation (9).

In more detail, the speed V is divided into three ranges such that:

$$0 \leq V < V_{min} \qquad (\alpha)$$

$$V_{min} \leq V < V_{max} \qquad (\beta)$$

$$V_{max} \leq V \qquad (\gamma)$$

where V represents the current speed and $V_{min}$, $V_{max}$ represent pre-determined threshold speed values. In relation to the three speed ranges, CPU 12 determines in which speed range the current speed is operating, and generates the control signal S to control the clock rate of the timer 15. For example, if the current speed is in ($\alpha$) range, the present clock cycle is doubled; if the speed is in ($\beta$) range, the present clock cycle is retained; and if the speed range is in ($\gamma$) range, the clock cycle is halved. Various control techniques are used as needed.

The above described method of controlling the sampling rate is used to enable following the movement of the pressed point in these embodiments.

In the relative type, when the operator does not press on the elastic member 1, the movement vector u is zero, and the cursor mark 30 is kept in the pressed point. In this case, since the speed is zero, the sampling period of the clock CLK becomes longer.

(B) Second Embodiment

In the first embodiment presented, the pointing device PD was made to be a stand-alone device for use with a desk top PC, for example. The second embodiment relates to a different type of pointing device, and presents a case of incorporating the pointing device PD within the PC body.

Figure 11 shows a perspective view of the second embodiment of the pointing device PD of the present invention. The pointing device PD is incorporated in a lap-top PC 50 having a display section 17. In this example, the elastic member 1 is disposed so as to protrude out from the front section of the keyboard 51.

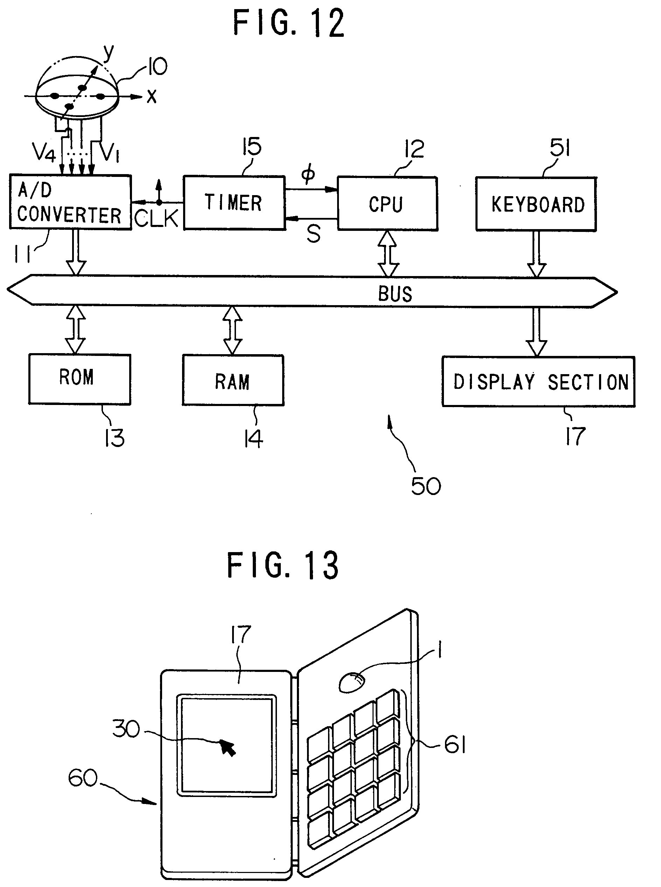

Figure 12 shows a block circuit diagram for the second embodiment. The difference in the circuit configuration between the first embodiment shown in Figure 2 and the second embodiment shown in Figure 12 is that an independent circuit device, a ,pulse generator 16, is not required, because this function can be provided by the PC 50. The cursor mark 30 is shown in the display section 17, and input data are inputted into PC 50 through the keyboards 51. CPU 12, ROM 13 and RAM 14 shown in Figure 12 are shared with PC 50.

That is, PC 50 performs computations related to defining the coordinates in the first embodiment or the movement vector u in addition to the standard computational requirements of PC 50, thereby specifying the cursor mark 30.

(C) Third Embodiment

A third embodiment of the pointing device PD will be explained with reference to Figure 13 which is a perspective view of the external appearance according to the third embodiment. The pointing device PD is incorporated into a portable electronic device having a display device 17, such as an electronic memo 60. In this case, the elastic member 1 is provided in the upper section of the key switch assembly 61. The electrical configuration of this embodiment is the same as that shown in Figure 12.

The second and third embodiments of the pointing device PS present an advantage that miniaturization of the pointing device PD has been made possible by eliminating the necessity for having a moving sphere.

(D) Fourth Embodiment

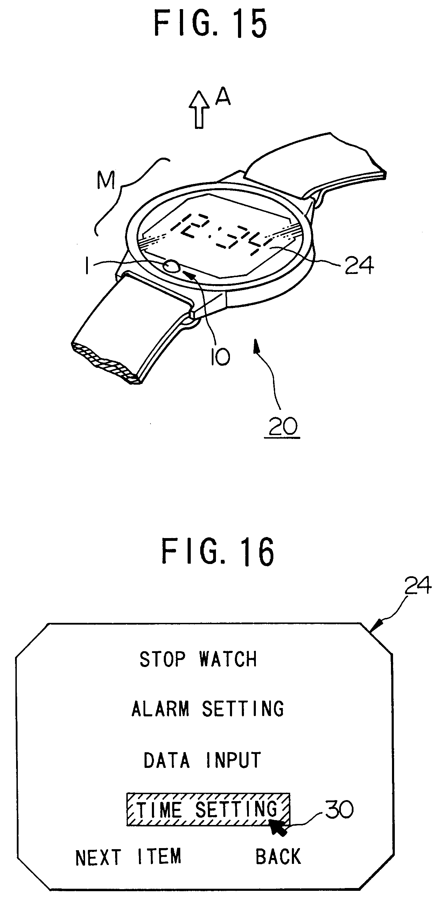

A fourth embodiment of the pointing device PD applied to a wrist watch 20 having a size even smaller than that in the foregoing embodiments will be explained with reference to Figures 15 to 17.

D-1 Construction of the Wrist Watch

Figure 15 is a perspective view of the wrist watch 20 having a pointing device PD of the fourth embodiment.

The wrist watch 20 has a liquid crystal display (LCD) panel 24 (panel for short) which is disposed in the middle of a watch casing M. The panel 20 is viewed in the direction A and normally displays time of the day, but can also display a menu for selecting a function. An example of a menu is shown in Figure 16. The functions shown in this menu are listed in rows, and for any one function, subsequent information are stored in layers below the first layer. A desired function can be selected by means of the cursor mark 30, and a clicking operation brings out the subsequent information in rotation.

D-2 Electrical Configuration of Position Sensor

Figure 15 shows an elastic member 1 which comprises a part of the position sensor 10, and is disposed below the panel 24. The screen coordinates are specified by pressing and clicking operations on the elastic member 1.

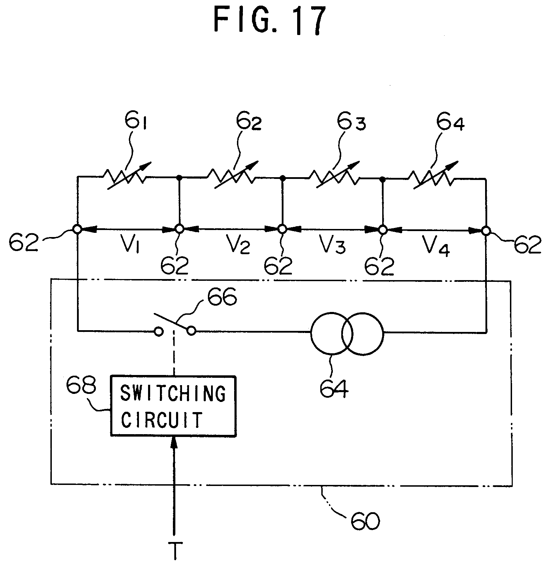

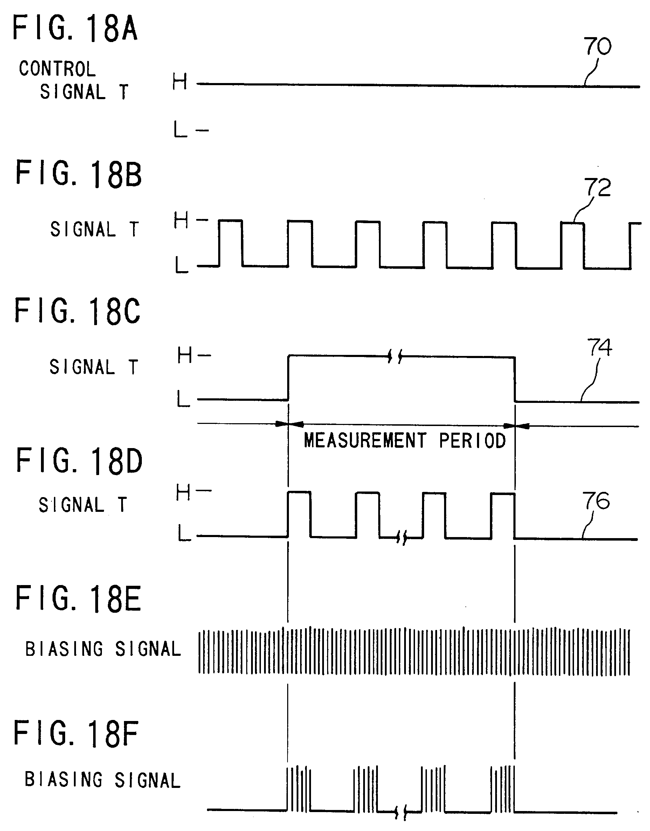

The electrical configuration of the elements $S_1 \sim S_4$ of the position sensor 10 will be explained with reference to Figures 17 and 18. The strain gauges $6_1$-$6_4$ are variable resistors to achieve balancing of the circuit.

The strain gauges $6_1$-$6_4$ correspond with the

elements $S_1 \sim S_4$ and are connected in series, as shown in Figure 17, with output terminals 62 at both ends. The ends of the series resistances are connected to a biasing circuit 60. The biasing circuit 60 comprises a fixed current circuit 64; a switch 66 for turning an output signal from the circuit 64 on/off; and a switching circuit for turning the switch 66 on when a control signal T becomes a high H. In other words, the output signal from the fixed current circuit 64 is impressed on the strain gauges $6_1$-$6_4$ when the control signal T becomes high H.

As described earlier, the resistance of a strain gauge changes with changing strains, therefore, when a constant current is flowed through the strain gauges $6_1$-$6_4$, the voltages $V_1 \sim V_4$ between the terminals 62 are proportional to the pressures exiting at the position indicators $Q_1 \sim Q_4$ and will represent the relative magnitude of the applied pressures.

There are varieties of waveforms which can be used for the control signal T, depending on the scale and the construction of a device to process output signals from the position sensor 10. Some examples are illustrated in Figure 18A shows a constant signal 70 showing a high H during both measurement period and non-measurement period; Figure 18B shows a pulsed signal 72 during both measurement period and non-measurement period; Figure 18C shows a signal 72 which shows a constant high H during measurement period; and Figure 18D shows a pulsed signal 76 which becomes high only during measurement period. Here, the measurement period refers to a period of detection of elastic vibrations.

For selecting a suitable for the signal T, the signal 70 is suitable for high accuracy of position detection. On the other hand, if low power consumption is important, then the pulsed signal 76 will be suitable. For reasonable accuracy and power conservation, signals 72 or 74 would be suitable.

This will be explained in more details below.

The strain gauges $6_1$-$6_4$ have a constant current flowing, and there is some generation of heat. Therefore, there is a temperature difference when the biasing is applied and when it is not. The temperature difference leads to a slight difference in the resistances, and can cause an error in pressure determinations. If the signal 70 is chosen for the control signal T, the current is flowing through the strain gauges $6_1$-$6_4$ even during non-measurement periods, and if measurements are made allowing sometime to elapse for thermal stabilization of the circuit, measurement errors stemming from temperature differences will be extremely low.

If the signal 76 is chosen for the control signal T, the current flows intermittently only during the measurement period, and the thermal generation effect is minimized and power conservation can also be achieved. Further power conservation would be possible by operating the position sensor 10 and its associated circuitry (A/D converter and amplifiers and so on) synchronously with the measurement operation. It can be arranged so that the power is applied to the measuring circuit only when the pulsed signal 76 is high H for further savings in power consumption.

The constant biasing current from the constant current output circuit 64 can have various waveforms. For example, the signals can have sufficiently higher frequencies than either the pulsed signals 72 or 76, as shown in Figure 18E. Of course, various combinations of signals 70, 72 and 76 can be chosen. In particular, if the pulsed signal 76 is chosen, the period of application of the biasing voltage on the stain gauges $6_1$-$6_4$ will be very brief, and the power consumption is also very low. The position sensor 10 and its measuring circuits can be operated synchronously with the application of the biasing voltage for power conservation, and only during the duration of the bias application.

It should be noted that the biasing waveform should be compatible with the vibrational pressure changes so as to be within the sampling capability, and also that the central processor is capable of handling the output data.

D-3 Electrical Configuration of the Wrist Watch

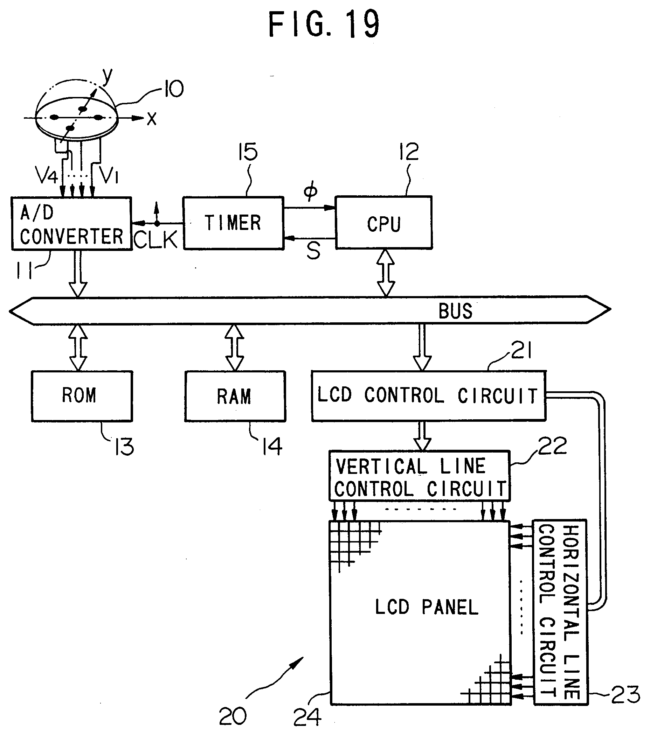

Figure 19 shows an electrical configuration of the wrist watch 20. Compared with the block circuit shown in Figure 12, the watch circuit has no keyboard 51, and a LCD panel 24 is used instead of the display section 17. The control signal T for the biasing circuit 60 shown in Figure 17 is generated by a clock CLK. Therefore, in the biasing circuit 60 in this embodiment, the biasing voltage is applied to the strain gauges $6_1$-$6_4$ synchronously with the clock CLK signals.

In Figure 19, a LCD control circuit 21 generates timing signals and display data (to be displayed on the LCD display panel 24) based on the data supplied via bus from CPU 12, and supplies them to the vertical line control circuit 22 and the horizontal line control circuit 23. The vertical line control circuit 22 and the horizontal line control circuit 23 are connected to each electrode of the panel 24, and controls the respective vertical or horizontal electrode. The data supplied by CPU 12 are thus displayed on the LCD panel 24.

D-4 Operation of the Wrist Watch

The operation of the wrist watch 20 having the construction presented above will be explained.

When watch display function is selected, the basic clock $\phi$ is counted by CPU 12, and the accumulated count is displayed on the panel 24 as time of the day. The technique is conventional and will not be described.

When the position sensor 10 is clicked while the time of the day is being displayed, the cursor mark (not shown) is displayed in the center of the panel 24 and at the same time, the display changes to a menu (refer to Figure 16).

At this time the cursor mark is moved to a desired function according a pre-selected absolute mode or the relative mode. The selected function is operated with the use of the position sensor 10.

It can be seen in this embodiment that the position sensor 10 is capable of performing all the operations required of any electronic devices regardless of the size of the complexity of functions.

As a final note, a method will be presented for increasing the accuracy of position determination by correcting the differences in the performance of the individual element $S_1 \sim S_4$ due to device character differences.

The technique is based on determining a position with three elements. First, three elements are selected from the four elements, and coordinates $x_n$, $y_n$ are determined for a point. Next, another three elements are chosen to obtain the coordinates $x_n$, $y_n$. The number of ways of selecting three elements from four elements is four ways given by $_4C_3$, and the remaining two ways will also produce two sets of coordinates $x_n$, $y_n$. The four sets of coordinates thus obtained independently will all be the same if all the elements $S_1 \sim S_4$ have the same characteristics. If there is a disagreement, it can be regarded that the output characteristics of the elements are different, and reverse computations can be carried out by adjusting the output voltages to obtain equal output values from all the four elements $S_1 \sim S_4$. By this technique, the individual performance difference can be corrected to achieve more accurate position determination.

The above embodiments are meant to be illustrative and do not restrict the application of the pointing device of the present device in any way. It can be understood that the principle of determining projection coordinates outlined can be applied to other forms of non-rotating position determination. For example, there will be many variations in the arrangement of the pressure sensing devices, as well as in the choice of the fabrication methods and the shape of the elastic member.

## Claims

1. A device (PD) for generating a signal indicative of the position of a point (Pn) on a surface to which pressure is applied, the device comprising

   a protruding body having a protruding contact surface (1);
   pressure sensing means ($S_1$-$S_4$) spaced apart from the contact surface (1); and
   computing means (11-16) responsive to the pressure sensing means (S1-S4) for generating a signal indicative of the position of the point (Pn) on the contact surface (1) to which pressure is applied, characterised in that
   said protruding body propagates vibrational pressure signals generated by pressure applied to the contact surface such that as propagation distance increases so the vibrational pressure signals are attenuated; and
   said sensing means senses attenuated pressure signals resulting from pressure applied to the contact surface.

2. A device according to claim 1, wherein the pressure sensing means ($S_1$-$S_4$) is for sensing blood pressure in the fingertip (40) of a user of the device.

3. A device according to claim 1 or 2, wherein the contact surface (7) is substantially hemispherical or generally dome shaped.

4. A device according to claim 1, 2 or 3, wherein said body is elastic.

5. A device according to any preceding claim, wherein said computing means (11-16) generates position-indicative signals at predetermined time intervals.

6. A device according to any preceding claim, wherein said computing means (11-16) calculates the position of the point (Pn) on the contact surface (1) at successive time intervals and generates a signal indicative of a movement vector of said point (Pn).

7. A device according to claim 6, comprising time interval control means (12) for adjusting the time interval in accordance with the speed of movement of said point (Pn).

8. A device according to any preceding claim, wherein said pressure sensing means ($S_1$-$S_4$) comprises three or four pressure sensors spaced equidistantly from the centre of the contact surface (1) in three or four fold symmetry.

9. A device according to any preceding claim, comprising a member (2) having a cavity ($4_1$) with an opening in communication with said contact surface (1), the pressure sensing means ($S_1$-$S_4$) being disposed in said cavity.

10. A device according to any preceding claim, wherein said contact surface (1) comprises a material (81) of higher modulus elasticity than that of a material between said contact surface and said sensing means ($S_1$-$S_4$).

11. A device according to any preceding claim, comprising a hand-held casing (M) from which said contact surface (1) protrudes.

12. An electronic pointing device for specifying a static position on a viewing screen of a computer comprising a device as defined in claim 1 wherein said protruding body comprises an elastic member (1) having a protruding upper contact surface and a planar bottom surface bonded to a base section of said elastic member by bonding means, for propagation of said vibrational pressure signals and wherein there are at least three said pressure sensing means disposed in said base section; and

said computing means comprises first computing means for computing projection co-ordinates of said point to which pressure is applied in order to define co-ordinates of said point to which pressure is applied in terms of a centre of said planar bottom section.

13. An electronic pointing device according to claim 12, comprising second computing means for computing said position indicator signals at specified time intervals, and computing a movement vector for indicating a positional change of said surface point in a given time interval.

**Patentansprüche**

1. Vorrichtung (PD) zum Erzeugen eines Signals, welches die Position eines mit Druck beaufschlagten Punkts (Pn) auf einer Fläche angibt, wobei die Vorrichtung umfaßt:

einen vorstehenden Körper mit einer vorstehenden Kontaktfläche (1); Druckerfassungsmittel ($S_1$-$S_4$), welche im Abstand zu der Kontaktfläche (1) angeordnet sind; und Berechnungsmittel (11-16), welche auf die Druckerfassungsmittel ($S_1$-$S_4$) ansprechen, um ein Signal zu erzeugen, welches die Position des mit Druck beaufschlagten Punkts (Pn) auf der Kontaktfläche (1) angibt, **dadurch gekennzeichnet,**
daß der vorstehende Körper durch auf die Kontaktfläche ausgeübten Druck erzeugte Vibrations-Drucksignale weiterleitet, derart, daß bei zunehmendem Ausbreitungsweg die Vibrations-Drucksignale abgeschwächt werden; und daß die Erfassungsmittel die aus dem auf die Kontaktfläche ausgeübten Druck resultierenden abgeschwächten Drucksignale erfassen.

2. Vorrichtung nach Anspruch 1, wobei die Druckerfassungsmittel ($S_1$-$S_4$) zum Erfassen eines Blutdrucks in der Fingerspitze (40) eines Benutzers der Vorrichtung ausgelegt sind.

3. Vorrichtung nach Anspruch 1 oder 2, wobei die Kontaktfläche (7) im wesentlichen halbkugelförmig oder im allgemeinen kuppelförmig ausgebildet ist.

4. Vorrichtung nach Anspruch 1, 2 oder 3, wobei der Körper elastisch ist.

5. Vorrichtung nach einem der vorangehenden Ansprüche, wobei die Berechnungsmittel (11-16) in vorbestimmten Zeitintervallen positionsangebende Signale erzeugen.

6. Vorrichtung nach einem der vorangehenden Ansprüche, wobei die Berechnungsmittel (11-16) die Position des Punkts (Pn) auf der Kontaktfläche (1) in aufeinanderfolgenden Zeitintervallen berechnen und ein Signal erzeugen, welches einen Bewegungsvektor des Punktes (Pn) angibt.

7. Vorrichtung nach Anspruch 6, umfassend Zeitintervall-Steuer/Regelmittel (12) zum Einstellen des Zeitintervalls nach Maßgabe der Bewegungsgeschwindigkeit des Punktes (Pn).

8. Vorrichtung nach einem der vorangehenden Ansprüche, wobei die Druckerfassungsmittel ($S_1$-$S_4$) drei oder vier Drucksensoren umfassen, welche äquidistant vom Mittelpunkt der Kontaktfläche (1) in drei- oder vierfacher Symmetrie im Abstand angeordnet sind.

9. Vorrichtung nach einem der vorangehenden Ansprüche, umfassend ein Element (2) mit einem Hohlraum ($4_1$) mit einer in Verbindung mit der Kontaktfläche (1) stehenden Öffnung, wobei die Druckerfassungsmittel ($S_1$-$S_4$) in dem Hohlraum angeordnet sind.

10. Vorrichtung nach einem der vorangehenden Ansprüche, wobei die Kontaktfläche (1) ein Material (81) mit höherem Elastizitätsmodul aufweist als der eines Materials zwischen der Kontaktfläche und den Erfassungsmitteln ($S_1$-$S_4$).

11. Vorrichtung nach einem der vorangehenden Ansprüche, umfassend ein von Hand gehaltenes Gehäuse (M), von welchem aus die Kontaktfläche (1) vorsteht.

12. Elektronische Zeigevorrichtung zum Zeigen auf eine feststehende Position an einem Bildschirm eines Computers, umfassend eine Vorrichtung, wie in Anspruch 1 definiert, wobei der vorstehende Körper ein elastisches Element (1) mit einer vorstehenden oberen Kontaktfläche und einer planaren Bodenfläche aufweist, welche an einem Basisabschnitt des elastischen Elements mittels Befestigungsmitteln angebracht ist, um die Vibrations-Drucksignale weiterzuleiten, und wobei wenigstens drei Druckerfassungsmittel in dem Basisabschnitt vorgesehen sind; und wobei die Berechnungsmittel ein erstes Berechnungsmittel zum Berechnen von Projektionskoordinaten des mit Druck beaufschlagten Punktes umfassen, um die Koordinaten des mit Druck beaufschlagten Punktes hinsichtlich eines Zentrums des planaren Bodenabschnitts zu definieren.

**13.** Elektronische Zeigevorrichtung nach Anspruch 12, umfassend ein zweites Berechnungsmittel zum Berechnen der Positions-Angabesignale in bestimmten Zeitintervallen und zum Berechnen eines Bewegungsvektors zum Angeben einer positionellen Veränderung des Oberflächenpunkts in einem vorbestimmten Intervall.

## Revendications

**1.** Dispositif (PD) pour générer un signal indicatif de la position d'un point (Pn) d'une surface sur lequel une pression est appliquée, le dispositif comprenant :

un corps saillant comportant une surface de contact saillante (1) ;
des moyens de détection de pression ($S_1$ à $S_4$) éloignés de la surface de contact (1) ; et
des moyens de calcul (11 à 16) sensibles aux moyens de détection de pression ($S_1$ à $S_4$) pour générer un signal indicatif de la position du point (Pn) de la surface de contact (1) auquel une pression est appliquée, caractérisé en ce que :
ledit corps saillant propage les signaux de pression vibratoires générés par la pression appliquée à la surface de contact, de façon que lorsque la distance de propagation augmente, les signaux de pression vibratoires soient atténués ; et
lesdits moyens de détection détectent les signaux de pression atténués résultant de la pression appliquée à la surface de contact.

**2.** Dispositif selon la revendication 1, dans lequel les moyens de détection de pression ($S_1$ à $S_4$) servent à détecter la tension artérielle au bout du doigt (40) d'un utilisateur du dispositif.

**3.** Dispositif selon la revendication 1 ou 2, dans lequel la surface de contact (7) est sensiblement hémisphérique ou généralement en forme de dôme.

**4.** Dispositif selon la revendication 1, 2 ou 3, dans lequel ledit corps est élastique.

**5.** Dispositif selon l'une quelconque des revendications précédentes, dans lequel lesdits moyens de calcul (11 à 16) génèrent des signaux indiquant une position à des intervalles de temps prédéterminés.

**6.** Dispositif selon l'une quelconque des revendications précédentes, dans lequel lesdits moyens de calcul (11 à 16) calculent la position du point (Pn) sur la surface de contact (1) à des intervalles de temps successifs et génèrent un signal indicatif d'un vecteur de mouvement dudit point (Pn).

**7.** Dispositif selon la revendication 6, comprenant des moyens de contrôle d'intervalle de temps (12) pour ajuster l'intervalle de temps en fonction de la vitesse de déplacement dudit point (Pn).

**8.** Dispositif selon l'une quelconque des revendications précédentes, dans lequel lesdits moyens de détection de pression ($S_1$ à $S_4$) comprennent trois ou quatre capteurs de pression se trouvant à égales distances du centre de la surface (1) selon trois ou quatre axes de symétrie.

**9.** Dispositif selon l'une quelconque des revendications précédentes, comprenant un élément (2) comportant une cavité ($4_1$) avec une ouverture qui communique avec ladite surface de contact (1), les moyens de détection de pression ($S_1$ à $S_4$) étant disposés dans ladite cavité.

**10.** Dispositif selon l'une quelconque des revendications précédentes, dans lequel ladite surface de contact (1) comprend un matériau (81) dont le module d'élasticité est supérieur à celui d'un matériau entre ladite surface de contact et lesdits moyens de détection ($S_1$ à $S_4$).

**11.** Dispositif selon l'une quelconque des revendications précédentes, comprenant un boîtier à main (M) à partir duquel ladite surface de contact (1) fait saillie.

**12.** Dispositif de pointage électronique pour spécifier une position statique sur un écran de visualisation d'un ordinateur comprenant un dispositif tel que défini dans la revendication 1, dans lequel ledit corps saillant comprend un élément élastique (1) comportant une surface de contact supérieure saillante et une surface inférieure plane reliée à une section de base dudit élément élastique par des moyens de liaison, pour propager lesdits signaux de pression vibratoires, et dans lequel lesdits moyens de détection de pression sont au moins au nombre de trois et sont disposés dans ladite section de base ; et

lesdits moyens de calcul comprennent des premiers moyens de calcul pour calculer les coordonnées de projection dudit point auquel la pression est appliquée afin de définir les coordonnées dudit point auquel la pression est appliquée par rapport à un centre de ladite section inférieure plane.

**13.** Dispositif de pointage électronique selon la revendication 12, comprenant des seconds moyens de calcul pour calculer lesdits signaux indicatifs de position à des intervalles de temps spécifiés, et pour calculer un vecteur de mouvement pour indiquer un changement de position dudit point de surface dans un intervalle de temps donné.

**16**

# FIG. 1

# FIG. 2

## FIG. 3A

## FIG. 3B

# FIG. 4

# FIG. 5

# FIG. 6A

40

Pn

I

C

M

# FIG. 6B

40

Pn

Pn+1

I

u

M

# FIG. 7A

# FIG. 7B

# FIG. 8

# FIG. 9

# FIG. 10

# FIG. 11

# FIG. 12

# FIG. 13

# FIG. 14A

# FIG. 14B

# FIG. 15

# FIG. 16

STOP WATCH

ALARM SETTING

DATA INPUT

TIME SETTING 30

NEXT ITEM        BACK

# FIG. 17

FIG. 18A

CONTROL
SIGNAL T

FIG. 18B

SIGNAL T

FIG. 18C

SIGNAL T

MEASUREMENT PERIOD

FIG. 18D

SIGNAL T

FIG. 18E

BIASING SIGNAL

FIG. 18F

BIASING SIGNAL

# FIG. 19